# FASCICULE DE BREVET EUROPEEN

(11) **EP 0 688 303 B1**
(45) Date de publication et mention de la délivrance du brevet: **13.11.1996**
(21) Numéro de dépôt: 94911177.7
(22) Date de dépôt: 10.03.1994
(51) Int. Cl.: C02F 3/12, C02F 1/28

(54) **PROCEDE PERFECTIONNE D'EPURATION D'EAUX USEES DU TYPE "A BOUES ACTIVEES", PERMETTANT D'ACCROITRE LES RENDEMENTS D'EPURATION**
VERBESSERTE METHODE ZUR REINIGUNG VON ABWASSER UNTER ANWENDUNG VON BELEBTEM SCHLAMM ZUR VERGRÖSSERUNG DER REINIGUNGSAUSBEUTEN
IMPROVED METHOD FOR PURIFYING WASTE WATER USING ACTIVATED SLUDGE TO INCREASE PURIFICATION YIELDS

(30) Priorité: 11.03.1993 AT 481/93; 25.10.1993 FR 9312791
(43) Date de publication de la demande: 27.12.1995
(73) Titulaire: NAINTSCH MINERALWERKE GESELLSCHAFT M.B.H., A-8045 Graz (AT)
(72) Inventeur: CLAUSS, Frédéric, F-31500 Toulouse (FR); WAMSER, Norbert, A-8010 Graz (AT); CAPDEVILLE, Bernard, F-31400 Toulouse (FR); HANGL, Manfred, A-8042 Graz (AT); TROPPER, Harald, A-8563 Ligist (AT)
(74) Mandataire: Cabinet BARRE LAFORGUE & associés
(86) Numéro de dépôt international: EP9400813
(87) Numéro de publication internationale: WO9420425

(56) Documents cités:
- CHEMICAL ABSTRACTS, vol. 81, no. 20, 18 Novembre 1974, Columbus, Ohio, US; abstract no. 126470u, page 401 ;colonne L ;
- CHEMICAL ABSTRACTS, vol. 102, no. 4, 28 Janvier 1985, Columbus, Ohio, US; abstract no. 31409u, page 426 ;colonne R ;
- DATABASE WPI Week 9240, Derwent Publications Ltd., London, GB; AN 92-328060 & JP,A,4 253 793 (SHIKOKU CHEM. IND. CO. LTD.24-8-92)
- PATENT ABSTRACTS OF JAPAN vol. 14, no. 509 (C-776) (4452) 7 Novembre 1990 & JP,A,02 211 292 (NKK CORP.) 22 Août 1990
- DATABASE WPI Week 8815, Derwent Publications Ltd., London, GB; AN 88-102016 & JP,A,63 051 993 (KENSETSUSHO DOBOKU ET AL.) 5 Mars 1988

## Description

L'invention concerne un procédé d'épuration d'eaux usées par voie biologique, du type dit "à boues activées".

Lors de l'épuration biologique d'eaux usées selon le procédé à boues activées -procédé utilisé dans plus de 60 % des stations d'épuration communales des pays développés- les eaux usées souvent préalablement dessablées et dégraissées sont conduites (parfois via un bassin de pré-décantation) dans le bassin d'activation où la dégradation biologique est réalisée par des bactéries. Ce bassin d'activation est aéré au moins pendant certains cycles afin de permettre un développement des bactéries aérobies en vue essentiellement de l'élimination de la pollution carbonée. Ce bassin peut aussi être soumis à des cycles non aérés pour le développement de bactéries anaérobies en vue également de la dégradation des nitrates ; il est aussi possible de prévoir un deuxième bassin non aéré pour le développement des bactéries anaérobies. Les bactéries ou micro-organismes forment des flocs de densité proche de celle de l'eau (désignés "boues activées") et les eaux usées épurées sont séparées de ces flocs par différence de densité, classiquement par gravité dans un bassin de post-décantation (généralement désigné par "clarificateur" ou "décanteur secondaire" et qui sera désigné ci-après par "décanteur"). L'eau épurée peut alors être directement rejetée à la rivière.

Les boues recueillies à la base du décanteur sont partiellement reconduites vers le bassin d'activation afin d'y maintenir un nombre élevé de micro-organismes épurateurs. Les boues en excès sont soutirées puis conditionnées à part afin de réduire leur volume et leur masse, en vue d'une utilisation agricole ou d'un dépôt en décharge.

Les exploitants des stations d'épuration biologique des eaux usées par boues activées sont confrontés à deux difficultés principales :
1) Maintenir une concentration suffisante de micro-organismes épurateurs dans le bassin d'activation au contact de l'eau à traiter.
   Si, de par la composition physico-chimique des eaux à l'entrée de la station, les bactéries qui se développent dans le milieu s'associent en flocs filamenteux qui décantent très peu (40 % des stations en Europe), la séparation eaux/micro-organismes épurateurs se fait très difficilement. Le décanteur ne peut plus jouer son rôle de clarification de l'eau traitée et le surnageant qui est dirigé vers la rivière contient de nombreux micro-organismes épurateurs : on assiste alors à un lessivage régulier du bassin d'activation qui se vide peu à peu des micro-organismes épurateurs, conduisant ainsi à l'arrêt de l'épuration des eaux usées.
2) Nitrifier les ions ammonium de l'effluent à traiter car, d'une part, les ions ammonium qui constituent la plus grande partie de la pollution azotée sont très toxiques, et d'autre part, la nitrification de l'ammonium est l'étape limitante de l'élimination des nutrients azotés en partie responsables des problèmes d'eutrophisation des fleuves, des rivières et des lacs.

Lorsque les quantités d'eaux usées à épurer sont supérieures à la capacité de traitement de la station (stations dites "à moyenne ou à forte charge", signifiant que la pollution à traiter est très importante par rapport à la quantité de micro-organismes épurateurs présents dans le bassin d'activation), l'exploitant ne peut plus faire recirculer les boues issues du décanteur par manque de capacité volumique de l'installation. C'est par exemple le cas des stations épurant les eaux usées de villes dont la population croît. Les boues activées sont alors presque totalement éliminées du système épuratoire. Il s'ensuit une très faible concentration, dans le bassin d'activation, de la quantité de micro-organismes dégradant la pollution carbonée et une absence totale de micro-organismes dégradant la pollution azotée, ces derniers ne s'implantant pas dans les boues "jeunes", c'est-à-dire dans des boues n'ayant pas séjourné très longtemps dans la station. La pollution carbonée entrant dans la station n'est donc que faiblement dégradée tandis que la pollution azotée n'est pas dégradée.

Peu de solutions existent pour maintenir une concentration suffisante de micro-organismes épurateurs (on parle souvent de "biomasse") dans le bassin d'activation, et/ou implanter les bactéries nitrifiantes indispensables à l'élimination de la pollution azotée (notamment NH₄⁺ et/ou NO₃⁻⁻). Dans le cas d'une station en sous-capacité (quantités d'eaux à traiter supérieures à la capacité de traitement), la seule solution consiste à agrandir les bassins d'activation (ou à changer de procédé). Cette extension de la station est très onéreuse et parfois impossible quand la station est située en zone urbanisée où les terrains disponibles manquent.

Par ailleurs, les faibles concentrations de micro-organismes épurateurs conduisent à un faible rendement des phases finales d'élimination des nitrates, et obligent à augmenter considérablement la taille des installations ou à prévoir des bassins auxiliaires pour éliminer ce type de pollution.

L'objet de la présente invention est de mettre à disposition un procédé qui permet, d'une part, une augmentation de la concentration de la biomasse épuratrice dans le bassin d'activation et une meilleure maîtrise de cette concentration, d'autre part, une augmentation de l'activité des bactéries présentes, même si les boues activées se présentent sous forme de filaments difficiles à séparer de l'eau traitée, et même si le taux de purge des boues dans le décanteur est important du fait de la sous capacité de la station à traiter les effluents entrants. Cette augmentation de la concentration et de l'activité de la biomasse active concerne en premier lieu les micro-organismes qui dégradent la pollution carbonée ; grâce à l'augmentation du temps de séjour des micro-organismes dans le bassin d'activation, elle concerne également les micro-organismes qui oxydent et dégradent la pollution ammoniacale. Le procédé perfectionné visé par l'invention permet donc une diminution des rejets de matières organiques dans les rivières ainsi qu'une élimination, à génie civil constant, des ions ammonium toxiques. En outre, l'augmentation de l'activité des bactéries se traduit par une consommation accrue des phosphates et donc par une élimination plus importante de la pollution phosphatée.

A cet effet, le procédé de l'invention est du type dit à boues activées, dans lequel on met en contact dans un bassin d'activation, des eaux usées contenant une pollution carbonée et/ou une pollution azotée et/ou une pollution phosphatée, avec une biomasse composée de micro-organismes épurateurs, on sépare l'eau traitée des boues activées dans un décanteur, et on recycle une fraction des boues activées vers le bassin d'activation. Selon la présente invention, on mélange à la biomasse une poudre minérale de talc ou de pyrophyllite ou de mica, à l'exclusion de tout liant organique, dans des conditions propres à mettre directement en contact les grains de minéraux et les bactéries et à engendrer la formation de flocs mixtes constitués de grains minéraux de talc, pyrophyllite ou mica emprisonnés dans une matrice bactérienne et liés directement à celle-ci, les boues activées formées par lesdits flocs mixtes grains minéraux/bactéries présentant une densité supérieure à celle de l'eau et étant partiellement recyclées en continu de façon à augmenter la concentration en micro-organismes dans le bassin d'activation et le temps de séjour desdits micro-organismes dans ledit bassin.

Par "décanteur", on entend tout système statique ou dynamique, favorisant la séparation solide/liquide par le jeu des différences de densité, tel que bassin de décantation par gravité, hydrocyclones...

On a pu observer dans le procédé de l'invention que, lorsque les grains de poudre de talc, pyrophyllite ou mica viennent en contact avec les micro-organismes, se constituent des flocs mixtes par un effet de piégeage des grains de poudre dans les flocs bactériens. Cet effet est inattendu en raison des caractéristiques de grande inertie physico-chimique, de non porosité et de faible surface spécifique des poudres sus-évoquées ; l'effet visé est d'autant plus inattendu que le talc, la pyrophyllite et le mica présentent un caractère lipophile bien connu qui leur confère un pouvoir adsorbant à l'égard des graisses et laisse prévoir une absence complète d'affinité à l'égard des bactéries (une telle affinité allant généralement de pair avec des matériaux de nature hydrophile). L'effet sus-évoqué de formation de flocs mixtes est très marqué et n'a pu jusqu'à présent être expliqué. Lorsque la quantité de poudre de talc, de pyrophyllite ou de mica est comprise entre 0,01 g/l et 2,0 g/l d'eaux usées, on constate que pratiquement tous les grains de poudre et tous les micro-organismes se sont assemblés en une multitude de flocs mixtes du type sus-évoqué.

La taille des particules de talc, pyrophyllite ou mica utilisées est avantageusement inférieure à 100 µm. Dans un mode de mise en oeuvre particulièrement avantageux du procédé selon l'invention, la taille des particules de talc, pyrophyllite ou mica utilisées est comprise entre 3 et 50 µm.

Par "talc", on désigne le silicate de magnésium hydraté de formule 3Mg0.4SiO₂.H₂O ou tout mélange de phyllosilicate contenant ce composé. Par "pyrophyllite", on désigne le silicate d'aluminium hydraté de formule Al₂O₃.4SiO₂.H₂O, parfois aussi dénommé "Agalmatolite", ou tout mélange de silicate contenant ce composé. Par "mica", on désigne les micas alumineux tels les muscovites de formule 6SiO₂.3Al₂O₃.K₂O.2H₂O, les micas magnésiens tels que les phlogopites de formule 6SiO₂.Al₂O₃.6MgO.K₂O.2H₂O ainsi que les illites alumineuses ou magnésiennes dérivant des minéraux précédents par des substitutions variables de Al à Si d'une part, de Fe à Al ou Mg d'autre part. Dans tous les cas, ces espèces naturelles peuvent contenir des minéraux associés.

Les flocs mixtes formés par le procédé selon l'invention ont une densité plus élevée que celle des simples flocs bactériens en raison de la masse volumique des grains de poudre, de l'ordre de 2,5 à 3 fois supérieure à celle des agrégats de micro-organismes qui se forment habituellement dans un milieu aqueux. Cette densité élevée permet d'obtenir une densification rapide des boues activées au cours des recyclages successifs, qui autorise en phase de fonctionnement permanent une bonne séparation de celles-ci dans le décanteur. Il est à noter que, lorsque le décanteur est un hydrocyclone, la séparation est grandement favorisée ; la technique d'hydrocyclonnage qui présente l'avantage de conduire à des dispositifs compacts adaptés pour le traitement éventuel des odeurs n'est que peu utilisée actuellement car les différences de densité entre les flocs bactériens et l'eau sont souvent très faibles et, de ce fait, les seuils de coupures très difficiles à maintenir. Dans tous les cas, la recirculation des micro-organismes épurateurs du décanteur vers le bassin d'activation est très largement favorisée, même si les bactéries se présentent sous forme de filaments (qui habituellement s'assemblent en flocs bactériens qui décantent très difficilement). De plus, cette meilleure recirculation des boues activées augmente le temps de séjour des micro-organismes épurateurs, permettant une implantation surprenante des bactéries nitrifiantes, même dans les stations dites "à moyenne ou forte charge". On a pu également constater, à poids égal de micro-organismes, une activité bactérienne accrue lorsque ceux-ci sont agglomérés en flocs mixtes micro-organismes/grains de poudre (par rapport à l'activité de flocs purement bactériens) ; cet effet également est inexpliqué. Cette augmentation d'activité (mesurée par la consommation d'oxygène dans le milieu) se traduit par une consommation accrue de phosphate. Il y a lieu de noter que les poudres précitées sont chimiquement neutres et ne sont pas solubles dans les eaux usées lorsqu'elles sont ajoutées à celles-ci (ce qui évite de charger les eaux d'une nouvelle pollution).

Une variante du procédé selon l'invention consiste à utiliser des poudres de talc, pyrophyllite ou mica cationisé. Il s'agit de poudres de talc, pyrophyllite ou mica traitées avec différents agents cationiques. En tant qu'agent cationique, on peut utiliser par exemple des composés -comme des amines à base d'épichlorhydrine, des polyamines aliphatiques quaternaires, etc... L'emploi de talc, pyrophyllite ou mica cationisé permet une densification des boues activées, qui dépasse celles atteintes avec les mêmes poudres minérales non traitées.

Les poudres servant d'additifs peuvent être introduites, conformément au procédé de l'invention, aussi bien avant le bassin de pré-décantation que directement dans le bassin d'activation. Il est aussi possible d'introduire le talc, la pyrophyllite ou le mica dans le circuit de recirculation des boues activées entre le décanteur et le bassin d'activation ou dans le décanteur (qu'il soit conventionnel ou non, dynamique ou statique) où il agira directement sur la densification des boues. Il a été démontré que l'ajout de poudre de talc, pyrophyllite ou mica directement dans le bassin d'activation est particulièrement efficace pour augmenter rapidement la concentration en micro-organismes. L'ajout de ces poudres dans le décanteur est particulièrement efficace dans le cas des bactéries filamenteuses pour éviter un lessivage de celles-ci.

Les exemples qui suivent sont destinés à illustrer le procédé de l'invention. Tous ces exemples sont mis en oeuvre avec des eaux usées prélevées à la sortie d'un décanteur primaire de type conventionnel recevant une charge hydraulique correspondant à une vitesse ascensionnelle de l'ordre de 0,5 m/h, à l'exception des exemples 8 et 9.

Les exemples 1 à 7 sont mis en oeuvre dans une station pilote comprenant (en aval de ce décanteur primaire) :
- un bassin d'activation cylindrique d'un volume de 3,5 l, alimenté à un débit de 1,5 l/h et oxygéné et brassé en continu (régulation de la concentration en oxygène du milieu à 5 mg/l),
- un décanteur cylindro-conique d'un volume de 3 1, dont la base conique est reliée, d'une part, par un conduit de recyclage des boues au bassin d'activation, d'autre part, à une pompe d'extraction,
- un système d'introduction de poudre minérale dans le bassin d'activation (ou pour les exemples 4, 5, 6 dans le décanteur), comprenant un réservoir de poudre en suspension dans l'eau et une pompe d'injection de cette suspension permettant d'ajuster la quantité de suspension et donc de poudre introduite dans le bassin d'activation (ou dans le décanteur).

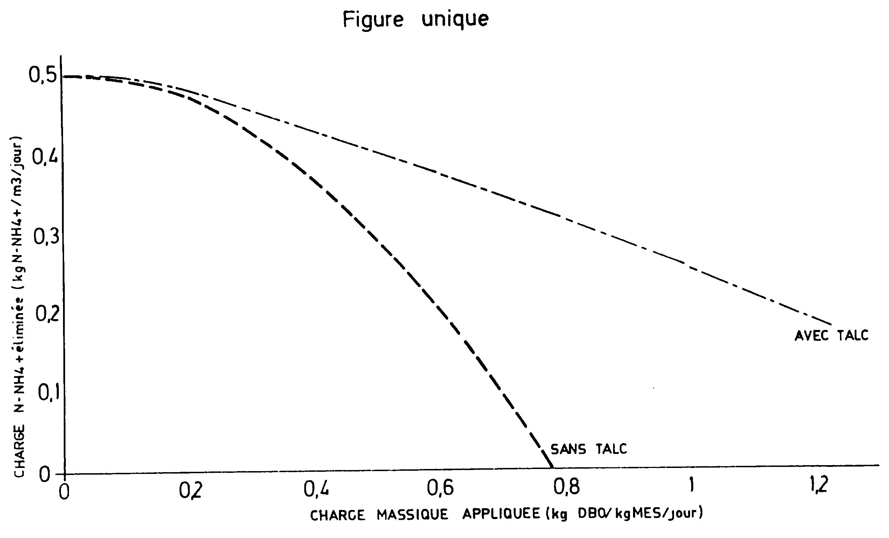

Les exemples 1, 2 et 3 d'une part, et les exemples 4, 5 et 6 d'autre part, ont été mis en oeuvre simultanément sur trois installations identiques à celle décrite précédemment et dénommée "installation pilote". L'exemple 7 est mis en oeuvre sur cette installation pilote, la figure unique des dessins illustrant les résultats obtenus à cet exemple 7.

### EXEMPLE 1 :

Stabilisation d'une station d'épuration par boues activées en fonctionnement conventionnel, par introduction de poudre de talc.

Cet exemple est mis en oeuvre en trois phases successives :
Première phase :
   Durée : 35 jours de fonctionnement classique afin de définir les qualités épuratoires de l'installation.
Deuxième phase :
   Durée : 35 jours de fonctionnement avec 0,15 g de talc/litre d'eaux usées à traiter, introduit en continu dans le bassin d'activation. Cette phase permet de mettre en évidence l'incidence du talc sur les qualités épuratoires de l'installation.
Troisième phase :
   Durée : 45 jours de fonctionnement classique, l'introduction du talc étant arrêtée au début de cette phase. Cette phase permet de s'assurer que l'effet constaté en phase 2 est bien dû à l'ajout de talc et non à une dérive du fonctionnement de l'installation et qu'en l'absence de talc, l'installation épure au même niveau que pendant la phase 1. Cette phase est plus longue que les précédentes, car il faut environ une semaine pour évacuer totalement le talc de l'installation.

Lors des trois phases successives, trois paramètres sont mesurés tous les jours, et leurs moyennes et écarts-types mesurés pour chaque phase de l'étude :
. la demande chimique en oxygène de la totalité de l'effluent (DCO totale, exprimée en mg O₂/l), caractéristique de la concentration en pollution carbonée, mesurée à l'entrée du bassin d'activation et à la sortie du décanteur (on calcule ainsi l'abattement de DCO totale, première caractéristique des performances épuratrices de l'installation),
. la demande chimique en oxygène de la fraction soluble de l'effluent (DCO soluble, exprimée en mg O₂/l), caractéristique de la concentration en pollution carbonique soluble, mesurée à l'entrée du bassin d'activation et à la sortie du décanteur (on calcule ainsi l'abattement de DCO soluble, deuxième caractéristique des performances épuratrices de l'installation),
. l'indice de Mohlmann, exprimé par le volume occupé par les boues activées décantées 30 minutes, rapporté à la masse de matières en suspension desdites boues activées (IM en ml/g) (plus cet indice est faible, plus la séparation flocs bactériens/eau épurée est aisée).

La poudre de talc utilisée est commercialisée par la société TALC DE LUZENAC (France), sous la référence "LUZENAC MB 30". Elle est constituée de 55 % de silicate de magnésium hydraté et 45 % de silicate de magnésium et d'aluminium hydraté. 75 % des particules ont un diamètre sphérique équivalent inférieur à 11 µm, 50 % à 6,3 µm et 25 % à 3,5 µm.

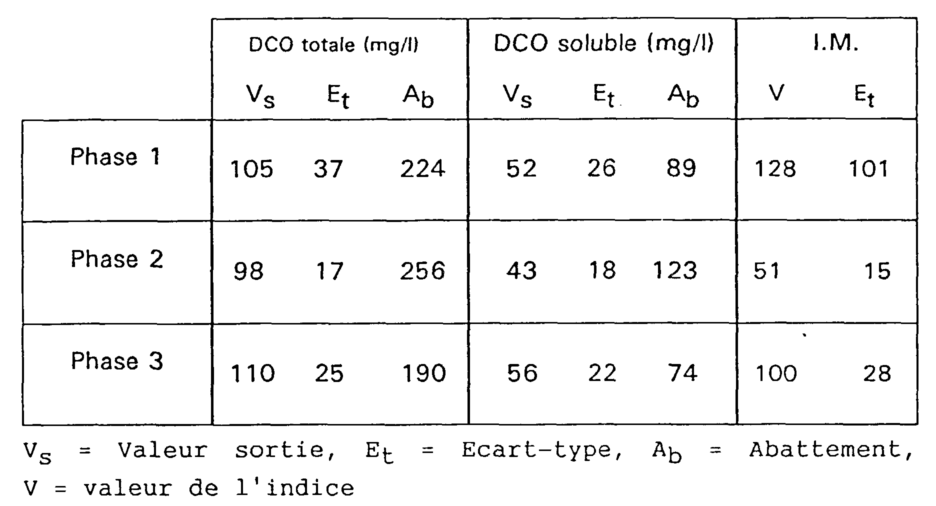

L'effet du talc est spectaculaire sur l'indice de Mohlmann (aptitude à la séparation solide/liquide), ainsi que sur la régularité des valeurs de sortie, caractérisée par de très faibles écarts-types. Non seulement le talc permet une épuration moyenne meilleure, mais sa qualité est très régulière.

L'effet du talc est indéniable sur le traitement de la pollution, tant totale que soluble.

### EXEMPLE 2 :

Stabilisation d'une station d'épuration par boues activées en fonctionnement conventionnel, par introduction de poudre de Mica.

Les phases d'études et les paramètres mesurés sont identiques à ceux décrits à l'exemple 1. La poudre de Mica est ajoutée à raison de 1,0 g/l d'eaux à traiter.

La poudre de Mica utilisée est commercialisée par la société Kaolin D'Arvor (France) sous la référence "MICARVOR 20". Elle est constituée de 55 % de Mica, 30 % de kaolinite et 15 % de Feldspaths. 75 % des particules ont un diamètre sphérique équivalent inférieur à 7,4 µm, 50 % à 4,1 µm et 25 % à 1,9 µm.

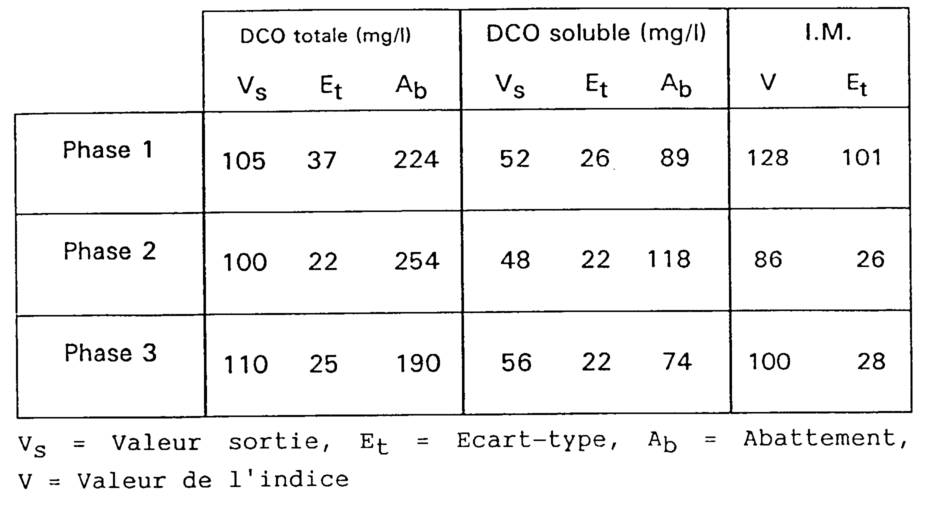

L'emploi de poudre de Mica permet donc une amélioration de l'élimination de la pollution carbonée, une amélioration de la régularité de cette élimination ainsi qu'une amélioration de la séparation boues activées/eau épurée.

### EXEMPLE 3 :

Mise en conformité d'une station déréglée par la présence de bactéries filamenteuses, par l'introduction de poudre de talc.

Cet exemple est mis en oeuvre en quatre phases successives :
Première phase :
   Durée : 10 jours de fonctionnement pendant lesquels l'installation pilote est alimentée par le même type d'eaux usées que celles utilisées aux exemples 1, 2 ou 3, auxquelles sont ajoutés 1,5 g de glucose par litre d'eau à traiter. Le glucose est une pollution facilement biodégradable, qui favorise le développement de bactéries filamenteuses. Après les cinq premiers jours, l'épuration est complètement perturbée : le décanteur est rempli de matières en suspension, il n'y a plus de séparation solide/liquide et les bactéries sont rejetées de l'installation pilote.
Deuxième phase :
   Durée : 3 jours de fonctionnement avec 2 g de talc/litre d'eaux usées à traiter + 1,5 g de glucose par litre d'eau à traiter, introduit en continu dans le décanteur. Après ces trois jours, la recirculation des boues est à nouveau possible.
Troisième phase :
   Durée : 27 jours de fonctionnement avec 0,15 g de talc/litre d'eaux usées à traiter + 1,5 g de glucose par litre d'eau, introduit en continu dans le décanteur. La diminution de la quantité de talc fut possible car la deuxième phase a rapidement permis une gestion normale de l'installation.
Quatrième phase :
   Durée : 15 jours de fonctionnement sans talc, uniquement le mélange eaux usées + glucose (1,5 g/l). Il faut environ une semaine pour évacuer totalement le talc de l'installation.

Les paramètres mesurés sont identiques à ceux décrits à l'exemple 1.

Le talc utilisé est "Luzenac MB30", utilisé et décrit à l'exemple 1.

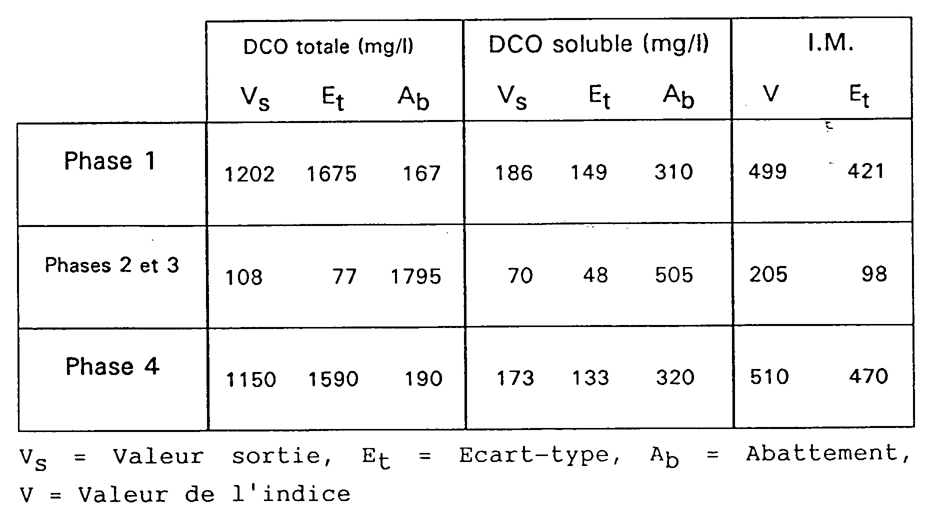

L'effet du talc est spectaculaire. Il permet de redescendre la valeur de la DCO totale en sortie de l'ouvrage sous la norme des 125 mg/l.

La diminution des trois caractéristiques épuratoires de l'installation est très rapide et très importante au cours des phases 2 et 3. Toutefois, une observation au microscope optique des flocs bactériens indique que l'écologie du système n'est pas modifiée : les bactéries filamenteuses sont toujours présentes dans le système, leurs effets néfastes pour la séparation solide/liquide ne sont plus ressentis car ces bactéries s'enroulent autour du talc pour constituer des flocs mixtes denses.

Lors de la quatrième phase (arrêt du talc), les problèmes réapparaissent au fur et à mesure de l'élimination du talc (via les purges des boues), jusqu'à redevenir insolvables quand tout le talc est éliminé. L'installation ne peut dès lors plus épurer convenablement les eaux usées.

### EXEMPLE 4 :

Mise en conformité d'une station déréglée par la présence de bactéries filamenteuses, par l'introduction de poudre de Mica.

Les phases d'études et les paramètres mesurés sont identiques à ceux décrits à l'exemple 5.

La poudre de Mica utilisée est celle décrite à l'exemple 3.

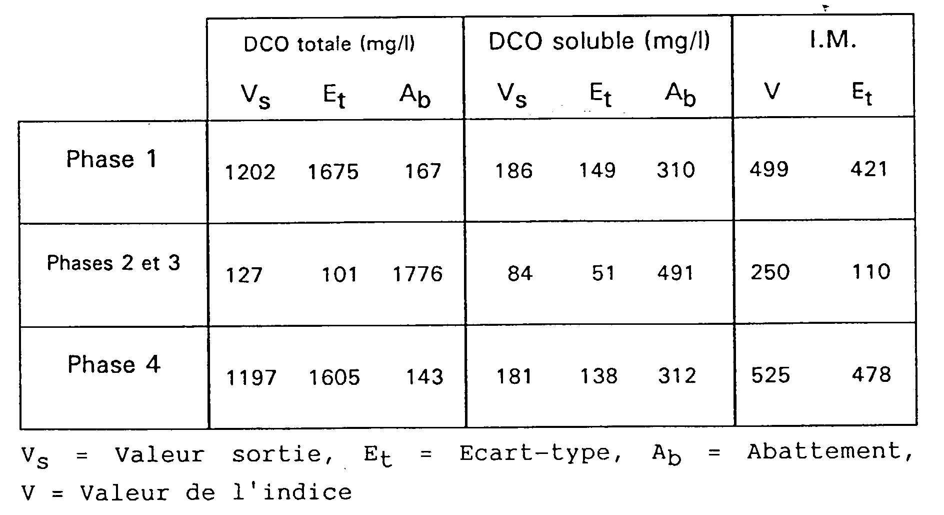

L'emploi de poudre de Mica permet donc un fonctionnement satisfaisant de l'installation, malgré la présence de bactéries filamenteuses. L'emploi de poudre de Mica ne modifie pas l'écologie du système.

### EXEMPLE 5 :

Nitrification à température constante par ajout de poudre de talc.

L'exemple 5 est mis en oeuvre sur l'installation pilote déjà décrite. Afin d'étudier l'influence de l'ajout de poudre de talc sur la nitrification des ions ammonium, l'ensemble de l'installation pilote est thermostatée à 15° C (la nitrification dépend énormément de la température, et une différence de quelques degrés modifie énormément la cinétique des réactions).

La réaction de nitrification dépendant aussi de la charge massique appliquée à l'installation, elle est étudiée avec et sans talc en faisant varier celle-ci. Ceci s'obtient en modifiant les conditions hydrauliques dans l'installation.

Les résultats obtenus sont illustrés sur les courbes 1 et 2 de la figure unique des dessins, montrant l'évolution de la quantité d'ions ammonium éliminés dans l'installation (charge N-NH₄⁺ éliminée, exprimée en kg N-NH₄⁺/m³/jour) en fonction du rapport de la quantité de pollution carbonée entrant dans l'installation à la quantité de micro-organismes présents dans le bassin d'activation (charge massique appliquée, exprimée en kg DBO/kg MES/jour).

La poudre de talc utilisée est celle utilisée à l'exemple 1, dans les mêmes quantités (0,15 g/l d'eau à traiter).

Les courbes 1 et 2 montrent sans ambiguïté que grâce à l'introduction de talc, il est possible d'éliminer de grosses quantités d'ions ammonium, même à forte ou très forte charge, alors que cette élimination est très limitée ou impossible sans talc.

### EXEMPLE 6 :

Mise en conformité d'une station d'épuration communale par ajout de poudre de talc

L'exemple 6 est mis en oeuvre sur une station d'épuration d'une capacité de 1 000 équivalent-habitant traitant entre 600 et 700 m³/j. La capacité nominative n'est que de 300 m³/j. Cette station, située en Styrie (Autriche), est soumise à de faibles températures et au cours de l'expérimentation, la température s'est stabilisée aux alentours de 10° C. A cette faible température, les cinétiques de nitrification sont considérablement ralenties et la dégradation de l'ammonium ne peut avoir lieu.

La station d'épuration dispose d'une unité de prétraitement de l'effluent (dégrilleur, dessableur, dégraisseur). L'effluent est ensuite décanté pendant environ 2 heures avant de rentrer dans le bassin d'activation. La séparation des flocs bactériens de l'eau épurée est assurée dans un décanteur secondaire de type conventionnel.

Cet exemple est mis en oeuvre en trois phases successives :
Première phase :
   Durée : 20 jours de fonctionnement classique.
   Température moyenne : 15° C.
Deuxième phase :
   Durée : 35 jours de fonctionnement avec environ 0,20 g de talc/l d'eaux usées- à traiter. La poudre de talc, difficilement mouillable, est pré-mouillée par de l'eau d'entrée du bassin d'activation dans une vis d'Archimède, avant d'être introduite en continu dans le bassin d'activation.
   Température moyenne : 10° C.
Troisième phase :
   Durée : 45 jours de fonctionnement classique, l'introduction de poudre de talc étant arrêtée au début de cette phase. Il faut environ 10 jours pour éliminer la poudre de talc de la station.
   Température moyenne : 10° C.

La poudre de talc utilisée est commercialisée par la Société Naintsch Mineralwerke (Autriche) sous la référence "Biosorb 30". Elle est composée de 55 % de silicate de magnésium hydraté et de 45 % de silicate de magnésium et d'aluminium hydraté. 75 % des particules ont un diamètre sphérique équivalent inférieur à 12 µm, 50 % à 6,7 µm et 25 % à 3,4 µm.

Lors des trois phases successives, de nombreux indices de pollution de l'eau rejetée sont mesurés quotidiennement :
. demande chimique en oxygène de la totalité de l'effluent (DCO totale, en mg/l),
. concentration en azote des ions ammonium de l'effluent (N-NH₄, en mg/l),
. concentration en azote des ions nitrates de l'effluent (N-NO₃, en mg/l),
. concentration en phosphore des ions orthophosphates de l'effluent (P-oPO₄), en mg/l). 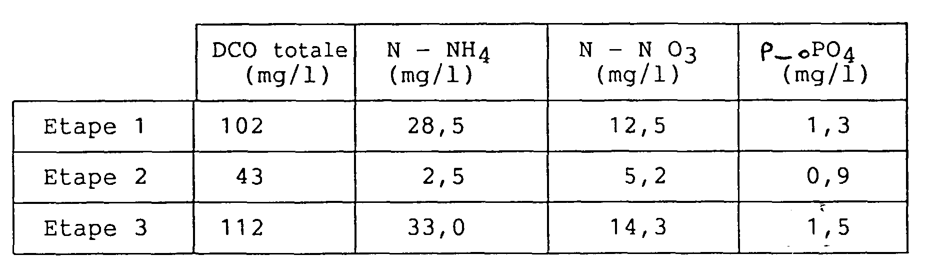 Valeurs moyennes en sortie de l'installation des principaux indicateurs de pollution de l'eau.

Ces valeurs peuvent être traduites en abattement dû au talc :

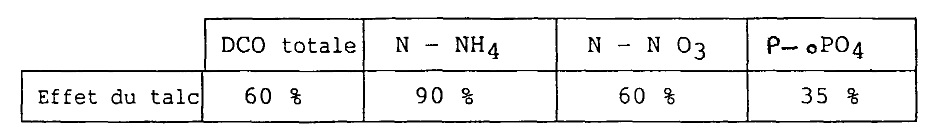

Abattement de pollution dû au talc, par rapport aux périodes sans talc.

Les effets du talc sont spectaculaires et inattendus. L'influence très positive de l'emploi de poudre de talc sur l'élimination de la pollution carbonée (DCO) et ammoniacale (NH₄⁺) déjà observée sur des installations pilotes est ici retrouvée. L'influence très positive de l'emploi de poudre de talc sur l'élimination des nitrates et des phosphates n'était pas pressentie, car tous les essais réalisés au laboratoire le furent sur des installations pilotes, presque parfaites. En particulier, les bassins d'activation de ces installations pilotes sont complètement aérés. De fait, la dénitrification ne pouvait être observée. Or, dans une station réelle, les puissances de brassage et d'aération ne sont pas homogènes sur tous les volumes et il existe des zones "anoxies", c'est-à-dire non aérées : c'est le cas de cette station où une dénitrification faible est classiquement possible. Cet effet inattendu de l'additif conforme à l'invention peut être expliqué par une "protection" de la poudre de talc vis-à-vis des organismes épurateurs présents dans le milieu et/ou à un effet de concentration des bactéries nitrifiantes dû à la présence de la poudre de talc. En effet, des mesures de "respiration des boues" réalisées sur des flocs classiques et des flocs mixtes indiquent que les flocs mixtes consomment deux à trois fois plus rapidement l'oxygène du bassin d'activation que les flocs classiques.

Ceci indique que l'activité bactérienne est beaucoup plus importante et peut expliquer les consommations accrues de phosphore par les bactéries, ainsi que les dégradations plus poussées de l'ammonium, des nitrates et de la pollution carbonée.

### EXEMPLE 7 :

Densification de boues activées par sédimentation en présence de différents additifs

Dans cet exemple, on a comparé la densification des boues activées seules et de boues mélangées à du carbonate de calcium ou à des agents cationiques seuls, à celle observée après l'ajout de talc, talc cationisé ou Mica conformément à l'invention.

Les boues activées proviennent de la station d'épuration communale où se sont déroulées les expérimentations décrites à l'exemple 6. Elles contiennent 4,1 g de matières sèches par litre de boues activées.

A un litre desdites boues activées, on a mélangé pendant 10 minutes des matières minérales, cationisées ou non :
a) 0,5 g de "Biosorb 30", talc décrit et utilisé à l'exemple 8,
b) 0,5 g de "Biosorb 30" traité avec 0,7 % en masse de "Percol" ® commercialisé par Allied Colloïd (GB), amine sur base d'épichlorhydrine,
c) 0,0035 g de "Percol" ®, soit la quantité apportée en b),
d) 0,5 g de "Biosorb 30" traité avec 0,7 % en masse de "Superfloc" ® (commercialisé par American Cyanamid Corporation (New Jersey - U.S.A.), polyamine aliphatique quaternaire,
e) 0,0035 g de "Superfloc" ®, soit la quantité apportée en d),
f) 0,5 g de "20B", kaolin,
g) 0,5 g de "Micarvor 20", Mica décrit et utilisé aux exemples 3 et 6,
h) 0,5 g de "Hydrocarb 5", carbonate de calcium commercialisé par la Société OMYA (SUISSE),
i) 0,5 g de "HTM 20", pyrophyllite commercialisée par la Société MINERAÇÃO MATHEUSS LEME Ltda (BRESIL). Cette pyrophyllite est pure à plus de 95 %. 75 % des particules ont un diamètre sphérique équivalent inférieur à 9 µm, 50 % à 5 µm et 25 % à 2,6 µm

Les mélanges ainsi obtenus, ainsi qu'une référence constituée par les seules boues activées (réf.), sont introduits dans des éprouvettes graduées et les volumes de boues décantées sont relevés après 30 minutes de décantation.

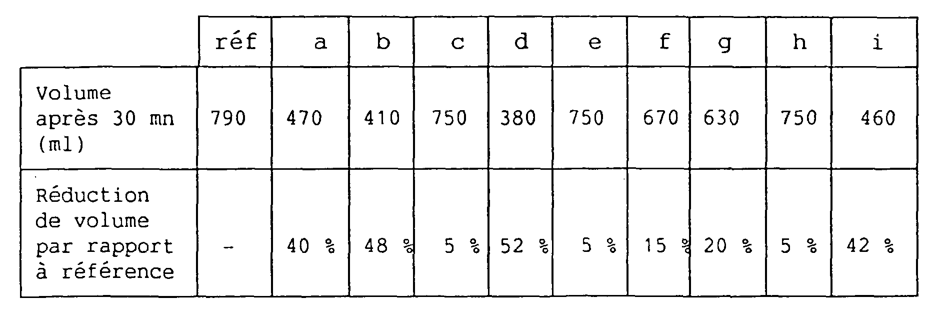

Ces résultats montrent, sans ambiguïté, le rôle important des poudres de talc, pyrophyllite et mica sur la sédimentation des boues activées, ainsi que la synergie qui existe entre les agents cationiques et ces poudres activées, les talcs en particulier. On notera que les additifs chimiques employés seuls, ainsi que le carbonate de calcium, n'ont que peu d'influence sur le procédé.

## Revendications

1. Procédé d'épuration d'eaux usées du type dit "à boues activées", permettant d'accroître le rendement d'épuration de la pollution carbonée, le rendement d'épuration de la pollution azotée et éventuellement le rendement d'épuration de la pollution phosphatée, dans lequel on met en contact dans un bassin d'activation des eaux usées contenant une pollution carbonée et/ou une pollution azotée et/ou une pollution phosphatée avec une biomasse composée de micro-organismes épurateurs, on sépare l'eau traitée des boues activées dans un décanteur, et on recycle une fraction des boues activées vers le bassin d'activation, ledit procédé étant caractérisé en ce qu'on mélange à la biomasse une poudre minérale de talc ou de pyrophyllite ou de mica, à l'exclusion de tout liant organique, pour mettre en contact les grains de minéraux et les bactéries et engendrer la formation de flocs mixtes constitués de grains minéraux de talc, pyrophyllite ou mica emprisonnés dans une matrice bactérienne, les boues activées formées par lesdits flocs mixtes grains minéraux/bactéries présentant une densité supérieure à celle de l'eau et étant partiellement recyclées en continu de façon à augmenter la concentration en micro-organismes dans le bassin d'activation et le temps de séjour desdits micro-organismes dans ledit bassin.

2. Procédé selon la revendication 1, caractérisé en ce qu'on utilise une poudre de talc, pyrophyllite ou mica constituée de particules de taille inférieure à 100 µm.

3. Procédé selon la revendication 2, caractérisé en ce qu'on utilise une poudre de talc, pyrophyllite ou mica constituée de particules de taille comprise entre 3 et 50 µm.

4. Procédé selon l'une des revendications 1, 2 ou 3, caractérisé en ce qu'on mélange entre 0,01 g et 2,0 g de poudre de talc, pyrophyllite ou mica par litre d'eaux usées à traiter entrant dans le bassin d'activation.

5. Procédé selon l'une des revendications 1, 2, 3 ou 4, caractérisé en ce qu'on utilise une poudre de talc, pyrophyllite ou mica cationisé.

## Patentansprüche

1. Abwasserreinigungsverfahren der als "Belebtschlammverfahren" bezeichneten Art, das es gestattet, den Wirkungsgrad der Beseitigung kohlenstoffhaltiger Fremdstoffe, den Wirkungsgrad der Beseitigung stickstoffhaltiger Fremdstoffe und möglicherweise den Wirkungsgrad der Beseitigung phosphathaltiger Fremdstoffe zu erhöhen, und zwar wird bei dem besagten Verfahren kohlenstoffhaltige Fremdstoffe und/oder stickstoffhaltige Fremdstoffe und/oder phosphathaltige Fremdstoffe enthaltendes Abwasser in einem Belebungsbecken mit einer sich aus reinigenden Mikroorganismen zusammengesetzten Biomasse in Kontakt gebracht, das behandelte Wasser in einem Absetzbecken von dem Belebtschlamm getrennt und ein Teil des Belebtschlamms im Kreislauf in das Belebungsbecken umgeleitet, wobei das besagte Verfahren dadurch gekennzeichnet ist, daß der Biomasse unter Ausschluß jedes organischen Bindemittels ein mineralisches Talk- oder Pyrophyllit- oder Glimmerpulver beigemischt wird, um die mineralischen Körner und die Bakterien miteinander in Kontakt zu bringen und das Entstehen gemischter Flocken zu bewirken, die sich aus mineralischen Körnern von Talk, Pyrophyllit oder Glimmer in einer baktierellen Grundmasse zusammensetzen, daß der durch die besagten gemischten Flocken aus mineralischen Körnern und Bakterien bestehende Belebtschlamm eine Dichte aufweist, die höher ist als die des Wassers, und im Kreislauf teilweise umgeleitet wird, um die Konzentration der Mikroorganismen in dem Belebungsbecken und die Verweilzeit der besagten Mikroorganismen in dem besagten Becken zu erhöhen.

2. Verfahren nach Anspruch 1, dadurch gekennzeichnet, daß von einem Talk-, Pyrophyllit- oder Glimmerpulver Gebrauch gemacht wird, das sich aus Teilchen geringerer Größe als 100 µm zusammensetzt.

3. Verfahren nach Anspruch 2, dadurch gekennzeichnet, daß von einem Talk-, Pyrophyllit- oder Glimmerpulver Gebrauch gemacht wird, das sich aus Teilchen der Größe von 3 bis 50 µm zusammensetzt.

4. Verfahren nach einem der Ansprüche 1, 2 oder 3, dadurch gekennzeichnet, daß je Liter des zu behandelnden Abwassers, das in das Belebungsbecken eingeführt wird, von 0,01 g bis 2,0 g Talk-, Pyrophyllit- oder Glimmerpulver beigemischt wird.

5. Verfahren nach einem der Ansprüche 1, 2, 3 oder 4, dadurch gekennzeichnet, daß von einem Pulver aus Talk, Pyrophyllit oder kationisiertem Glimmer Gebrauch gemacht wird.

## Claims

1. Waste-water purification process of the type known as "activated-sludge process" by means of which it is possible to increase the efficiency with which carbonaceous pollution is removed, the efficiency with which nitrogenous pollution is removed and possibly the efficiency with which phosphatic pollution is removed, in which waste water containing carbonaceous pollution and/or nitrogenous pollution and/or phosphatic pollution is brought into contact in an activated-sludge tank with a biomass composed of purifying micro-organisms, the treated water is separated from the activated sludge in a settling tank and a fraction of the activated sludge is recycled to the activated-sludge tank, said process being characterised in that a mineral powder consisting of talc or pyrophyllite or mica is admixed to the biomass in the absence of any organic binder in order to bring the mineral grains and the bacteria into contact with one another and in order to bring about the formation of mixed flakes consisting of mineral grains of talc, pyrophyllite or mica confined within a bacterial matrix, whereby the activated sludge formed by said mixed flakes constituted by mineral grains and bacteria has a density higher than that of water and is in part continuously recycled so as to augment the micro-organism concentration in the activated-sludge tank and the dwell-time of said micro-organisms in said tank.

2. Process according to Claim 1, characterised in that use is made of a powder of talc, pyrophyllite or mica consisting of particles of a size smaller than 100 µm.

3. Process according to Claim 2, characterised in that use is made of a powder of talc, pyrophyllite or mica consisting of particles of a size between 3 and 50 µm.

4. Process according to one of Claims 1, 2 or 3, characterised in that between 0.01 g and 2.0 g of powder of talc, pyrophyllite or mica is admixed to each liter of waste water to be treated which enters the activated-sludge tank.

5. Process according to one of Claims 1, 2, 3 or 4, characterised in that use is made of a powder of talc, pyrophyllite or cationised mica.
